# EUROPEAN PATENT APPLICATION

(11) **EP 2 701 236 A1**
(43) Date of publication of application: **26.02.2014**
(21) Application number: 13171777.9
(22) Date of filing: 13.06.2013
(51) Int. Cl.: H01Q 9/04, H01Q 9/06, H01Q 13/20, H01Q 21/00, H01Q 21/12, G06K 7/10, H01Q 1/22, H01Q 1/38

(54) **Near field antenna**

(30) Priority: 24.08.2012 JP 2012185771; 28.12.2012 JP 2012288388
(71) Applicant: FUJITSU LIMITED, Kawasaki-shi, Kanagawa 211-8588 (JP)
(72) Inventor: Andrenko, Andrey, Kanagawa 211-8588 (JP); Manabu, Kai, Kanagawa 211-8588 (JP)
(74) Representative: Stebbing, Timothy Charles

(57) **Abstract**

The near field antenna includes: a ground electrode arranged on a lower surface of a first dielectric layer (10-1); a conductor (12) which is arranged between the first dielectric layer (10-1) and a second dielectric layer (10-2), and forms a microstrip antenna with the ground electrode, one end of the conductor being connected to a power feeding port (12a) and the another end of the conductor being an open end (12b); and at least one resonator (13-1 to 13-5) arranged on an upper surface of the second dielectric layer (10-2), within a range in which the resonator is able to electromagnetically couple with the microstrip antenna at current nodes of a standing wave. The near field antenna provides improved uniformity of an electric field in the vincinity of a surface of an antenna and can strengthen intensity of the electric field. The near field antenna can be installed in a shelf.

## Description

### FIELD

The present invention relates to, for example, a near field antenna which can be used for communication with a radio frequency IC tag.

### BACKGROUND

In recent years, Radio Frequency Identification (RFID) systems are widely used. Typically, some RFID systems utilize electromagnetic waves of a UHF band (900 MHz band) or a microwave (2.45 GHz) as a communication medium, and some RFID systems utilize a magnetic field by mutual induction. Among them, the RFID system utilizing the electromagnetic wave of a UHF band is attracting attention since the communicatable distance is relatively long.

As an antenna which can be utilized for a tag reader to communicate with a radio frequency IC tag (hereinafter, referred to as RFID tag) utilizing the electromagnetic wave of a UHF band, a microstrip antenna is proposed which utilizes a microstrip line as an antenna (refer to refer to Publication of US patent No. 7750813 and Carla R. Medeiros et. al., "RFID Smart Shelf With Confined Detection Volume at UHF", IEEE ANTENNAS AND WIRELESS PROPAGATION LETTERS, vol. 7, pp. 773-776, 2008).

### SUMMARY

A way of managing is proposed in which goods placed on a shelf are managed by installing an antenna of the tag reader in the shelf, and communicating between the RFID tag provided to the goods placed on the shelf and the tag readers.

Such an antenna installed in the shelf is called a shelf antenna. As for a shelf antenna, it is preferable that a uniform and strong electric field can be formed in the vicinity of the surface of the shelf antenna for the specific radio frequency utilized for communication, so that the shelf antenna can communicate with the RFID tag on the goods placed any place on the shelf in which the shelf antenna is installed. Moreover, a shelf antenna preferably has a flat shape so that it is not necessary to thicken the shelf.

In view of above, an object of the specification is to provide a near field antenna for a RFID tag reader which can improve uniformity of an electric field in the vicinity of a surface of an antenna, and can strengthen intensity of the electric field.

According to one embodiment, a near field antenna is provided. The near field antenna includes: a substrate including a first dielectric layer and a second dielectric layer provided above the first dielectric layer; a ground electrode arranged on a lower surface of the first dielectric layer; a conductor which is arranged between the first dielectric layer and the second dielectric layer, and forms a microstrip antenna with the ground electrode, one end of the conductor being connected to a power feeding port and the other end of the conductor being an open end; and at least one resonator arranged on an upper surface of the second dielectric layer, within a range in which the resonator is able to electromagnetically couple with the microstrip antenna for any of nodal points of a standing wave of current which flows through the microstrip antenna depending on an electric wave with a certain design wavelength, radiated from the microstrip antenna or received by the microstrip antenna.

### BRIEF DESCRIPTION OF DRAWINGS

FIG. 1 is a perspective view of a shelf antenna according to a first embodiment.
FIG. 2 is a side cross-sectional view of the shelf antenna along a line AA' seen from the direction of an arrow in FIG. 1.
FIG. 3 is a plan view of the shelf antenna illustrated in FIG. 1.
FIG. 4 is a drawing illustrating a simulation result of frequency characteristic of S parameter with respect to the shelf antenna according to the first embodiment.
FIG. 5 is drawings illustrating simulation results of electric field formed in surface's vicinity of the shelf antenna according to the first embodiment.
FIG. 6 is a plan view of a shelf antenna according to a second embodiment.
FIG. 7 is a drawing illustrating a simulation result of frequency characteristic of an S parameter with respect to the shelf antenna according to the second embodiment.
FIG. 8 is drawings illustrating simulation results of electric field formed in surface's vicinity of the shelf antenna according to the second embodiment.
FIG. 9 is a plan view of a shelf antenna according to a third embodiment.
FIG. 10 is a drawing illustrating a simulation result of frequency characteristic of an S parameter with respect to the shelf antenna according to the third embodiment.
FIG. 11 is drawings illustrating simulation results of electric field formed in surface's vicinity of the shelf antenna according to the third embodiment.
FIG. 12 is a plan view of a shelf antenna according to a fourth embodiment.
FIG. 13A is a drawing illustrating a simulation result of an intensity of an electric field component in a direction parallel to x-axis direction formed in surface's vicinity of the shelf antenna.
FIG. 13B is a drawing illustrating a simulation result of an intensity of an electric field component in a direction parallel to y-axis direction formed in surface's vicinity of the shelf antenna.
FIG. 14 is a drawing illustrating a simulation result of frequency characteristic of the S parameter with respect to the shelf antenna.
FIG. 15 is a plan view of a shelf antenna according to a modification of the fourth embodiment.
FIG. 16A and FIG. 16B are plan views of the shelf antenna according to further modification of the fourth embodiment, respectively.
FIG. 17 is a plan view of a shelf antenna according to a further modification of the fourth embodiment.
FIGs. 18A to 18C are schematic plan views of shelf antennae according to other embodiments, respectively.

### DESCRIPTION OF EMBODIMENTS

Hereinafter, near field antennae for RFID tag readers according to various embodiments will be described with reference to drawings.

The near field antennae use a microstrip line, one end of which is connected to a power feeding port and the other end of which is an open end, as a microstrip antenna. Therefore, in the near field antennae, a current which flows through the microstrip antenna is reflected by the open end, whereby the current forms a standing wave. The near field antennae include at least one conductor for resonance in a region where electromagnetic coupling is possible with the microstrip antenna. The region is in the vicinity of any of nodal points of the standing wave, i.e., any of positions where flowing current is minimum and the intensity of the electric field around the position is maximum. This causes an improvement of the uniformity and intensity of the electric field in the vicinity of an antenna surface.

In each embodiment described below, each near field antenna disclosed in this specification is formed as a shelf antenna. However, the near field antennae disclosed in this specification may be utilized for purposes other than the shelf antenna.

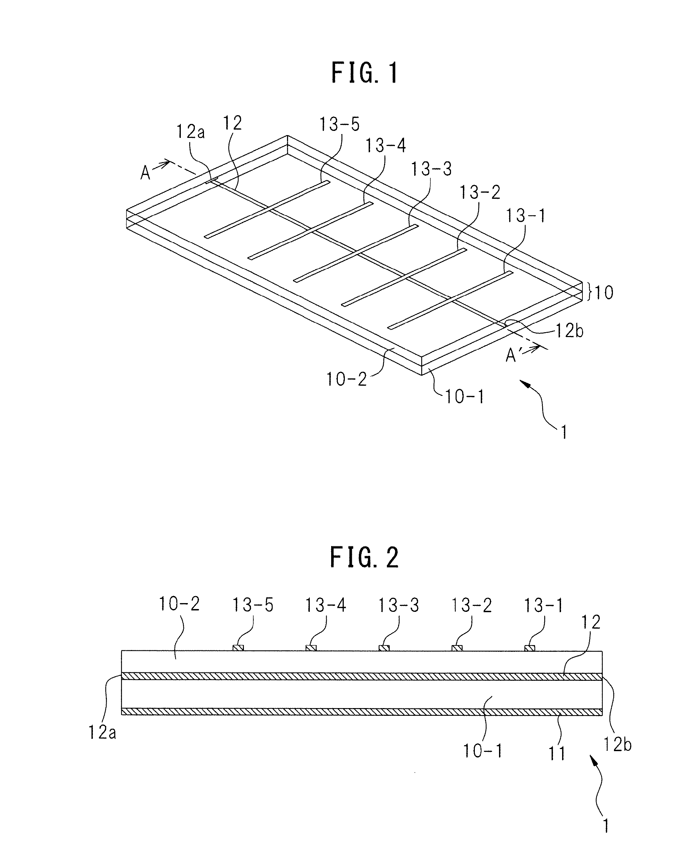

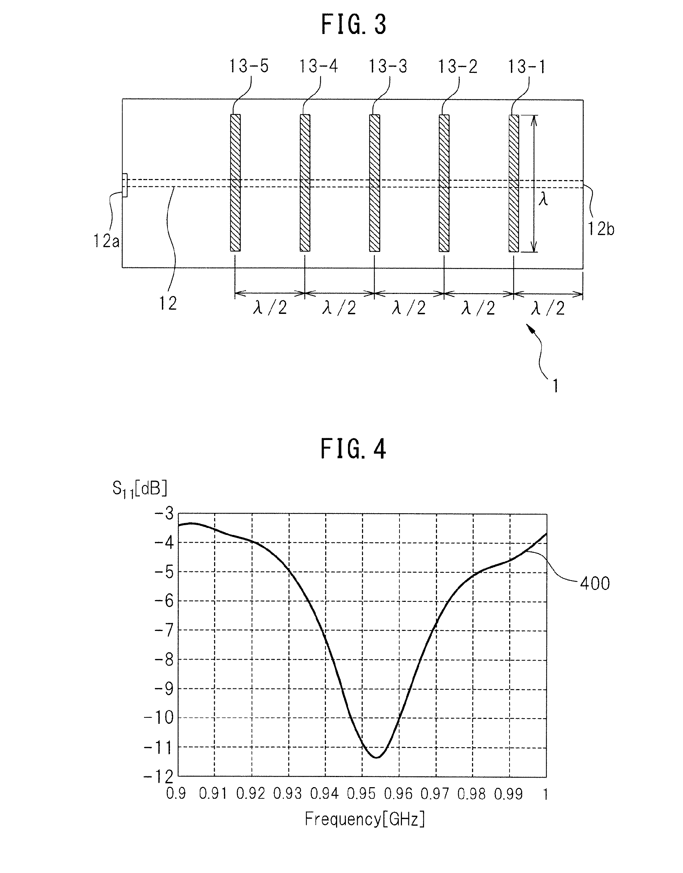

FIG. 1 is a perspective view of a shelf antenna according to a first embodiment. FIG. 2 is a side cross-sectional view of the shelf antenna along a line AA' seen from a direction of an arrow in FIG. 1. FIG. 3 is a plan view of the shelf antenna illustrated in FIG. 1.

The shelf antenna 1 includes a substrate 10 which includes two dielectric layers, a ground electrode 11 provided under the substrate 10, a conductor 12 provided between the two dielectric layers of the substrate 10, and a plurality of resonators 13-1 to 13-5 provided on an upper surface of the substrate 10.

The substrate 10 supports the ground electrode 11, the conductor 12, and the resonators 13-1 to 13-5. The substrate 10 includes a lower layer 10-1 located in relatively lower side, and an upper layer 10-2 arranged above the lower layer 10-1. Both of the lower layer 10-1 and the upper layer 10-2 of the substrate 10 are formed with a dielectric, and accordingly, the ground electrode 11, the conductor 12, and the resonator 13-1 to 13-5 are isolated each other. For example, the lower layer 10-1 and the upper layer 10-2 may be formed of a glass epoxy resin such as FR-4, respectively. Alternatively, the lower layer 10-1 and the upper layer 10-2 may be formed of other dielectric which can be layered. Moreover, the lower layer 10-1 and the upper layer 10-2 may be formed with the same dielectric, or may be formed with different dielectrics.

The ground electrode 11 is a grounded plain-platelike conductor, and is provided so that the overall lower surface of the substrate 10 may be covered.

The conductor 12 is a conductor in the form of a line provided between the lower layer 10-1 and the upper layer 10-2 of the substrate 10, and one end of the conductor 12 is a power feeding port 12a. On the other hand, the other end 12b of the conductor 12 is an open end. The conductor 12, the ground electrode 11, and the lower layer 10-1 of the substrate 10 forms the microstrip antenna.

Since the end 12b of the conductor 12 is the open end, the current which flows through the conductor 12 due to the electric wave radiated from the microstrip antenna, or due to the electric wave received by the microstrip antenna forms a standing wave. Therefore, nodal points of the standing wave are formed at a distance of half-wavelength of the current and distances of integral multiples thereof from the end 12b of the conductor 12, i.e., from the open end of the microstrip antenna. It is noted that, since the conductor 12 is located between the lower layer 10-1 and the upper layer 10-2, the wavelength of the electric wave shortens depending on the relative permittivity of the lower layer 10-1 and the relative permittivity of the upper layer 10-2. At each nodal point of the standing wave, the current has a local minimum value, and a relatively strong electric field is formed around the nodal point. Hereinafter, the wavelength of the electric wave radiated from the microstrip antenna or received by the microstrip antenna in the substrate 10 is referred to as a design wavelength for the sake of simplicity.

Each of the resonators 13-1 to 13-5 is formed with a conductor in the form of a line which has a length substantially equal to the design wavelength or integral multiples thereof, and is provided on the surface of the upper layer 10-2 of the substrate 10. In the present embodiment, the length of each resonator is substantially equal to the design wavelength.

As described above, the relatively strong electric field is formed around the conductor 12 at the distance of half design wavelength and distances of integral multiples thereof from the open end 12b of the microstrip antenna along with the conductor 12. Therefore, each of the resonators 13-1 to 13-5 is arranged, along with the conductor 12, at the distance of half design wavelength and distances of substantially integral multiples thereof from the end 12b of the conductor 12, so that the resonator crosses the conductor 12 perpendicular thereto. In the present embodiment, the resonators 13-1 to 13-5 are arranged in the vicinity of positions where are spaced from the open end 12b at distances of λ/2, λ, 3λ/2, 2λ and 5λ/2, respectively (λ denotes the design wavelength). Accordingly, each resonator 13-1 to 13-5 is electromagnetically coupled with the microstrip antenna with respect to an electric wave which has the design wavelength. Therefore, each resonator 13-1 to 13-5 can radiate or receive the electric wave with the design wavelength. Furthermore, since the resonators 13-1 to 13-5 are arranged so that the resonators cross the conductor 12 perpendicular thereto, each of the resonators 13-1 to 13-5 can form the electric field which expands in a different direction from the electric field due to the microstrip antenna. As a result, uniformity and intensity of the electric field in the vicinity of the surface of the shelf antenna 1 are improved in comparison with the electric field produced by only the microstrip antenna.

In addition, for example, based on a result of an electric field simulation using a finite element method, the exact arrangement position of each resonator 13-1 to 13-5 is adjusted so that the electromagnetic coupling between each resonator 13-1 to 13-5 and the microstrip antenna may be the strongest. Moreover, the length of each resonator may be determined, based on the result of the electric field simulation using the finite element method, so that the electric field radiated from each resonator 13-1 to 13-5 may be the strongest.

The ground electrode 11, the conductor 12, and the resonators 13-1 to 13-5 are made of, for example, metal such as copper, gold, silver and nickel, alloys thereof, or other material which has conductivity. The ground electrode 11, the conductor 12, and the resonators 13-1 to 13-5 are fixed to the lower layer 10-1 or the upper layer 10-2 of the substrate 10 by etching or adhesion, for example. Moreover, the lower layer 10-1 and the upper layer 10-2 are also fixed to each other by adhesion, for example.

The thickness of the upper layer 10-2 is optimized by a simulation using a finite element method so that the microstrip antenna and each resonator 13-1 to 13-5 are electromagnetically coupled. On the other hand, the thickness of the lower layer 10-1 is determined so that the characteristic impedance of the microstrip antenna is a certain value, for example, 50Ω or 75Ω.

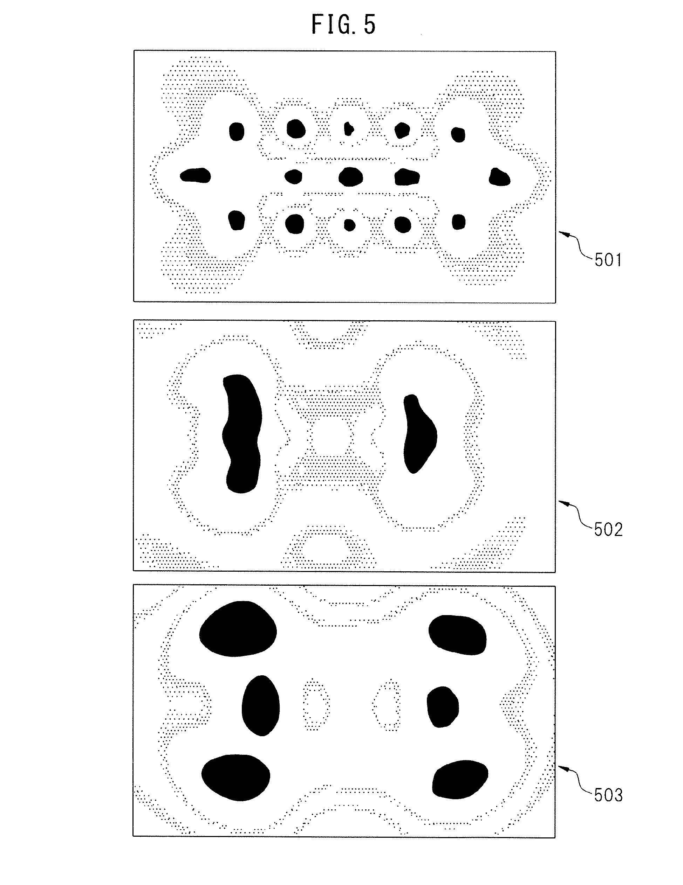

FIG. 4 is a drawing illustrating a simulation result of frequency characteristic of S parameter with respect to the shelf antenna 1. FIG. 5 is drawings illustrating simulation results of the electric field formed in surface's vicinity of the shelf antenna 1. With respect to the simulation results of which are illustrated in FIG. 4 and FIG. 5, the condition of the simulation is defined as follows. Both of the lower layer 10-1 and the upper layer 10-2 of the substrate 10 are formed by FR4 (relative permittivity εr= 4.4, and dielectric tangent tanδ=0.02). The length of the substrate 10 along a longitudinal direction of the conductor 12 is 550 mm, and the length of the substrate 10 along a direction perpendicular to the longitudinal direction of the conductor 12 is 200 mm. The thickness of the lower layer 10-1 is 1.6 mm so that the characteristic impedance of the microstrip line formed with the lower layer 10-1, the ground electrode 11 and the conductor 12 is 50 Ω. The thickness of the upper layer 10-2 is 1.0 mm.

The ground electrode 11, the conductor 12 and the resonators 13-1 to 13-5 are formed with copper (electric conductivity σ=5.8 x 10⁷). Furthermore, the width of the conductor 12 is 3 mm. On the other hand, the width of each resonator 13-1 to 13-5 is 4 mm, and the length of each resonator is 161 mm. The distance from the open end 12b of the conductor 12 to the center line of the resonator 13-1 is 84 mm. Furthermore, the distance between the center line of the resonator 13-1 and the center line of the resonator 13-2 is 85 mm. Similarly, the distance between the center line of the resonator 13-2 and the center line of the resonator 13-3, the distance between the center line of the resonator 13-3 and the center line of the resonator 13-4, and the distance between the center line of the resonator 13-4 and the center line of the resonator 13-5 are 82 mm, 85 mm and 85 mm, respectively.

In FIG. 4, a horizontal axis represents frequency [GHz] and a vertical axis represents value [dB] of S₁₁ parameter. The graph 400 represents the frequency characteristic of the S₁₁ parameter of the shelf antenna 1, obtained by a simulation of electromagnetic field according to a finite element method. As illustrated in the graph 400, it is found that the S₁₁ parameter of the shelf antenna 1 is -10 dB or less, the range providing an indication of excellent antenna characteristics, in 950 MHz to 960 MHz utilized for an RFID system.

In FIG. 5, the graph 501 represents the intensity distribution of the electric field on a plane which is parallel to the surface of the shelf antenna 1 at a distance of 50 mm above from the surface of the shelf antenna 1. The graph 502 represents the intensity distribution of the electric field on a plane which is parallel to the surface of the shelf antenna 1 at a distance of 100 mm above from the surface of the shelf antenna 1. The graph 503 represents the intensity distribution of the electric field on a plane which is parallel to the surface of the shelf antenna 1 at a distance of 200 mm above from the surface of the shelf antenna 1. In each graph, the frequency of the electric wave is 950 MHz. In each graph, the area which has deeper color represents a stronger electric field. As illustrated in the graphs 501 to 503, it is found that the electric field is strong not only in the vicinity of the conductor 12 but also in the vicinity of each resonator 13-1 to 13-5. Therefore, it is found that the uniformity of the electric field in the vicinity of the surface of the shelf antenna 1 is improved in comparison with the uniformity of the electric field formed by the microstrip antenna itself. The maximum values of the intensities of the electric field at the distances 50 mm, 100 mm, and 200 mm above from the surface of the shelf antenna 1 are 9.7 V/m, 2.9 V/m and 1.2 V/m, respectively.

According to above-described configuration, in this shelf antenna, the current which flows through the microstrip antenna forms a standing wave by forming one end of the microstrip antenna as the open end. Then, the microstrip antenna and the resonators are electromagnetically coupled by arranging the resonators in the vicinity of the nodal points of the standing wave. Therefore, this shelf antenna can radiate the electric wave from both of the microstrip antenna and the resonators, and can receive the electric wave by both of them, whereby it is possible to improve the uniformity of the electric field in the vicinity of the surface of the shelf antenna, and to achieve stronger intensity of the electric field.

Next, a shelf antenna according to a second embodiment will be described. The shelf antenna according to the second embodiment is different from the shelf antenna according to the first embodiment in a position of the resonators. Accordingly, hereinafter, the description related to the resonators will be made. The explanation for other components of the shelf antenna according to the second embodiment can be referred to the explanation of corresponding components of the shelf antenna according to the first embodiment.

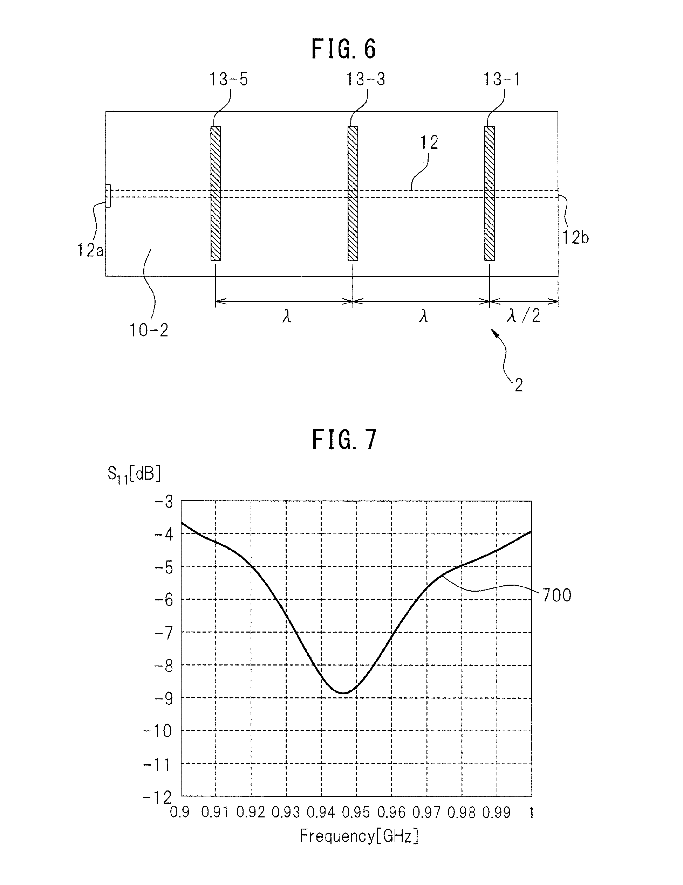

FIG. 6 is a plan view of the shelf antenna according to the second embodiment. In FIG. 6, the same reference numbers are provided to each component of the shelf antenna 2 according to the second embodiment as the reference number of the corresponding component of the shelf antenna 1 illustrated in FIG. 1 through FIG. 3.

In the shelf antenna 2 according to the second embodiment, each of the three resonators 13-1, 13-3, and 13-5 is formed with a conductor in the form of a line which has a length substantially equal to the design wavelength, and each of resonators is provided on the surface of the upper layer 10-2 of the substrate. However, it is different from the shelf antenna 1 according to the first embodiment in that the resonators 13-2 and the resonator 13-4 located at distances of integral multiples of the design wavelength from the open end 12b are omitted in the shelf antenna 2. In other words, the resonators 13-1, 13-3, and 13-5 are provided in positions at the distances of sum of the half design wavelength and the integral multiples of the design wavelength from the open end 12b of the microstrip antenna, respectively. Therefore, the distance between two resonators which are adjacent each other along the conductor 12 is substantially equal to the design wavelength.

In the shelf antenna 1 according to the first embodiment, each of the resonators 13-1 to 13-5 is separated from the other resonators adjacent thereto at the distance of substantially half design wavelength along with the conductor 12. Therefore, the phases of the current which flows through two adjacent resonators are reversed with each other. On the other hand, in the shelf antenna 2 according to the second embodiment, since each of the resonators 13-1, 13-3, and 13-5 is separated from the other resonators adjacent thereto at the distance of substantially design wavelength along with the conductor 12, the phases of the current which flows through two adjacent resonators are in-phase. Accordingly, the electric field formed by each resonator can also be strengthened one another.

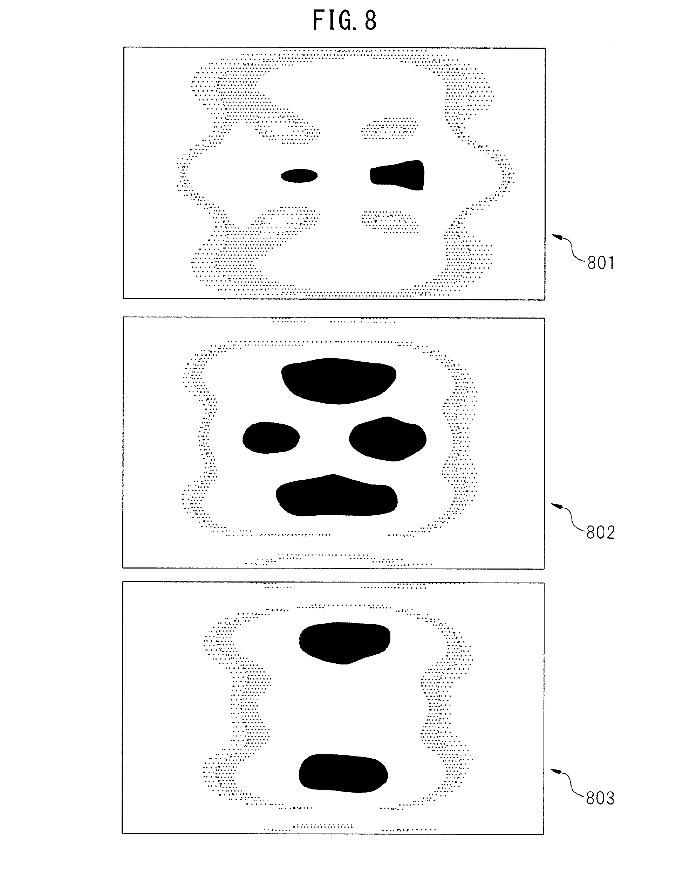

FIG. 7 is a drawing illustrating a simulation result of frequency characteristic of S parameter with respect to the shelf antenna 2. FIG. 8 is drawings illustrating simulation results of electric field formed in surface's vicinity of the shelf antenna 2. In this simulation, it is assumed that the size and the position of each component of the shelf antenna 2 are the same as the size and position of corresponding component of the shelf antenna 1.

In FIG. 7, a horizontal axis represents frequency [GHz] and a vertical axis represents value [dB] of S₁₁ parameter. The graph 700 represents the frequency characteristic of the S₁₁ parameter of the shelf antenna 2, obtained by a simulation of electromagnetic field according to a finite element method. As illustrated in the graph 700, it is found that the S₁₁ parameter of the shelf antenna 2 is -6 dB or less, the range providing an indication of antenna characteristics for operation without any difficulty, in 950 MHz to 960 MHz utilized for an RFID system.

In FIG. 8, the graph 801 represents the intensity distribution of the electric field on a plane which is parallel to the surface of the shelf antenna 2 at a distance of 50 mm above from the surface of the shelf antenna 2. The graph 802 represents the intensity distribution of the electric field on a plane which is parallel to the surface of the shelf antenna 2 at a distance of 100 mm above from the surface of the shelf antenna 2. The graph 803 represents the intensity distribution of the electric field on a plane which is parallel to the surface of the shelf antenna 2 at a distance of 200 mm above from the surface of the shelf antenna 2. In each graph, the frequency of the electric wave is 950 MHz. In each graph, the area which has deeper color represents a stronger electric field. As illustrated in the graphs 801 to 803, it is found that the electric field is strong not only in the vicinity of the conductor 12 but also in the vicinity of each resonator 13-1, 13-3 and 13-5. Furthermore, it is found that, in the position of 100 mm above from the surface of the shelf antenna 2, the intensity distribution of the electric field is more uniform in comparison with the electric field formed by the shelf antenna 1.

Furthermore, the maximum values of the intensities of the electric field at the distances 50 mm, 100 mm, and 200 mm above from the surface of the shelf antenna 2 are 11.6 V/m, 5.6 V/m and 4.2 V/m, respectively. Those values in respective positions are stronger than the maximum values of the intensities of the electric field about the shelf antenna 1.

As described above, in the shelf antenna according to the second embodiment, the distance between two resonators adjacent to each other is substantially equal to the design wavelength. Accordingly, the phases of the current which flows through each resonator is in-phase. As a result, the electric fields radiated from respective resonators are strengthened one another, whereby it is possible to improve the uniformity of the electric field in the vicinity of the surface of the shelf antenna, and to strengthen the intensity of the electric field.

Next, a shelf antenna according to a third embodiment will be described. In the shelf antenna according to the third embodiment, the conductor which forms the microstrip antenna is bent, for example, the conductor may meander, whereby the interval between resonators adjacent to each other is narrowed, in comparison with the shelf antenna according to the first embodiment. Accordingly, hereinafter, the description related to the conductor and the resonators will be made. The explanation for other components of the shelf antenna according to the third embodiment can be referred to the explanation of corresponding components of the shelf antenna according to the first embodiment.

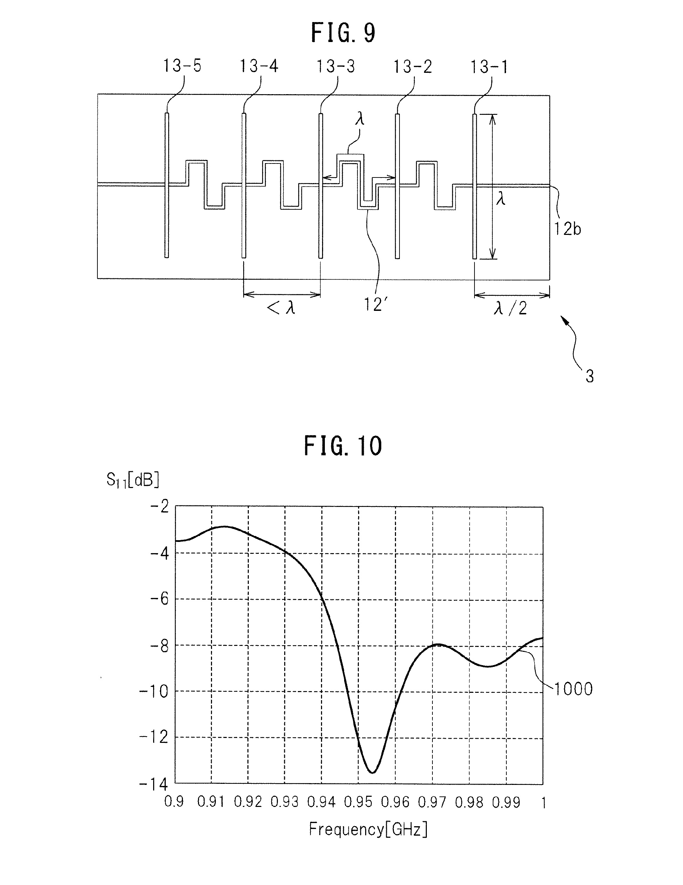

FIG. 9 is a plan view of the shelf antenna according to the third embodiment. In FIG. 9, the same reference numbers are provided to each component of the shelf antenna 3 according to the third embodiment as the reference number of the corresponding component of the shelf antenna 1 illustrated in FIG. 1 through FIG. 3.

In the shelf antenna 3 according to the third embodiment, a conductor 12' which forms a part of the microstrip antenna includes a meander shape, in which the conductor is bent to a right angle, at a plurality of positions between the two resonators adjacent to each other.

In the shelf antenna 3 according to the third embodiment, each of the five resonators 13-1 to 13-5 is formed with a conductor in the form of a line which has a length substantially equal to the design wavelength, and each of resonators is provided on the surface of the upper layer 10-2 of the substrate. Each of the resonators 13-1 to 13-5 is arranged so that the distance along the conductor 12' between two resonators adjacent to each other is substantially equal to the design wavelength. Therefore, the distance in a straight line between two resonators adjacent to each other is shorter than the design wavelength. As a result, the electric waves radiated from respective resonators can be strengthened one another. Moreover, in this embodiment, the resonator 13-1 which is the nearest to the open end 12b of the microstrip antenna among the resonators 13-1 to 13-5 is preferably arranged at the distance of substantially half design wavelength from the open end 12b along the conductor 12', i.e., in the vicinity of the nodal point of the standing wave nearest to the open end 12b.

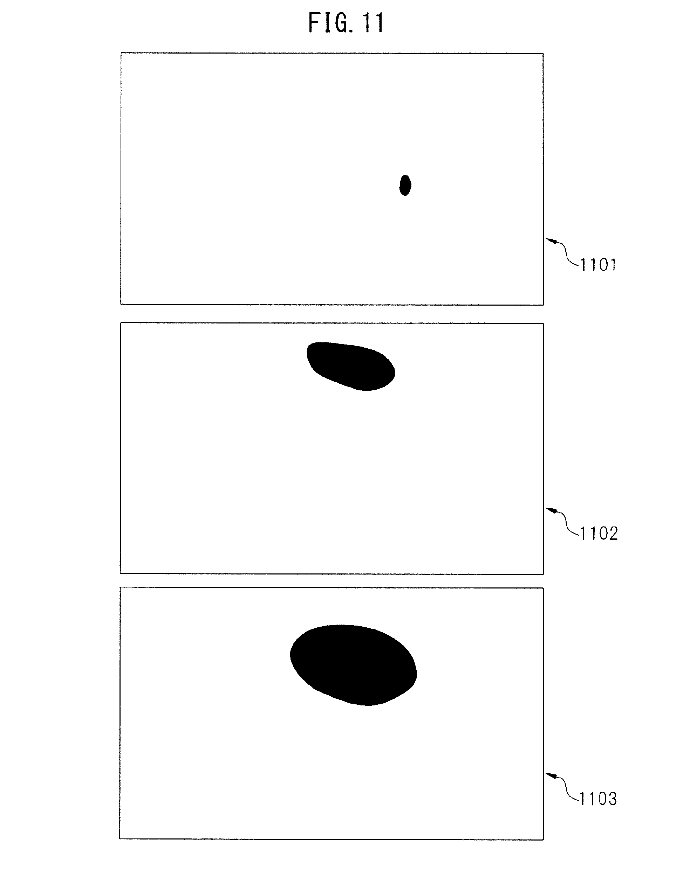

FIG. 10 is a drawing illustrating a simulation result of frequency characteristic of S parameter with respect to the shelf antenna 3. FIG. 11 is drawings illustrating simulation results of electric field formed in surface's vicinity of the shelf antenna 3. The condition of this simulation is defined as follows. As illustrated in FIG. 9, with respect to sections formed by bending the conductor 12', the length of the longest section which is perpendicular to a longitudinal direction of the conductor 12' is 50 mm, and the length of the each section which is parallel to the longitudinal direction of the conductor 12' and is adjacent to the longest section is 20 mm. Moreover, the distance in a straight line between the center lines of two adjacent resonators is 86 mm so that the length along the conductor 12' between the two adjacent resonators is substantially equal to the design wavelength. Further, the length of the substrate 10 along a longitudinal direction of the conductor 12' is 505 mm. The sizes and the materials of respective components of the shelf antenna 3 other than those described above are the same as the sizes and the materials which are set in the simulation of the shelf antenna 1 according to the first embodiment.

In FIG. 10, a horizontal axis represents frequency [GHz] and a vertical axis represents value [dB] of S₁₁ parameter. The graph 1000 represents the frequency characteristic of the S₁₁ parameter of the shelf antenna 3, obtained by a simulation of electromagnetic field according to a finite element method.

As illustrated in the graph 1000, it is found that the S₁₁ parameter of the shelf antenna 3 is -10 dB or less, the range providing an indication of excellent antenna characteristics, in 950 MHz to 960 MHz utilized for an RFID system.

In FIG. 11, the graph 1101 represents the intensity distribution of the electric field on a plane which is parallel to the surface of the shelf antenna 3 at a distance of 50 mm above from the surface of the shelf antenna 3. The graph 1102 represents the intensity distribution of the electric field on a plane which is parallel to the surface of the shelf antenna 3 at a distance of 100 mm above from the surface of the shelf antenna 3. The graph 1103 represents the intensity distribution of the electric field on a plane which is parallel to the surface of the shelf antenna 3 at a distance of 200 mm above from the surface of the shelf antenna 3. In each graph, the frequency of the electric wave is 950 MHz. In each graph, the area which has deeper color represents a stronger electric field. As illustrated in the graphs 1101 to 1103, it is found that the electric field is strong not only in the vicinity of the conductor 12' but also in the vicinity of each of resonators 13-1 to 13-5. Furthermore, it is found that, in the position of 100 mm above from the surface of the shelf antenna 3 and in the position of 200 mm above from the surface thereof, the intensity distribution of the electric field is more uniform in comparison with the electric field formed by the shelf antenna 1.

Furthermore, the maximum values of the intensities of the electric field at the distances 50 mm, 100 mm, and 200 mm above from the surface of the shelf antenna 3 are 17.3 V/m, 11.3 V/m and 7.8 V/m, respectively. Those values in respective positions are stronger than the maximum values of the intensities of the electric field about the shelf antenna 1 or the shelf antenna 2.

As described above, in the shelf antenna according to the third embodiment, since the conductor 12' includes the meander shape, the length along the conductor 12' between the two adjacent resonators is substantially equal to the design wavelength whereas the distance in a straight line between the two resonators is narrower than the design wavelength. Therefore, in this shelf antenna, the electric fields radiated from respective resonators can be strengthened one another. As a result, this shelf antenna can improve the uniformity of the electric field in the vicinity of the surface of the shelf antenna, and strengthen the intensity of the electric field in the vicinity of the surface of the shelf antenna.

According to modifications of the third embodiment, the conductor 12' may be bent in any manner between two adjacent resonators. For example, the conductor 12' may be formed between the two adjacent resonators in a shape of a sine wave, or in a shape of a sawtooth.

Moreover, according to another modification of the third embodiment, each resonator may be arranged so that the distance along the conductor which is a part of the microstrip antenna between the two adjacent resonators is substantially half design wavelength, and the distance in a straight line between the two adjacent resonators is shorter than the half design wavelength.

Next, a shelf antenna according to a fourth embodiment will be described. The shelf antenna according to the fourth embodiment is different from the shelf antenna according to the third embodiment in that each resonator is formed in a convex toward an open end of the conductor, and at least a part of each resonator and a line extending from the power feeding port to the open end of the conductor makes an acute angle. By this means, the shelf antenna produces the electric field components along a long side direction and the electric field components along a short side direction of the shelf antenna, respectively. This results in a uniform intensity of the electric field in a plane parallel to the surface of the shelf antenna, regardless of the direction of the electric field. Hereinafter, a description of the conductor and the resonators will be made. An explanation of other components of the shelf antenna according to the fourth embodiment can be referred to in the explanation of corresponding components of the shelf antenna according to the first to third embodiments.

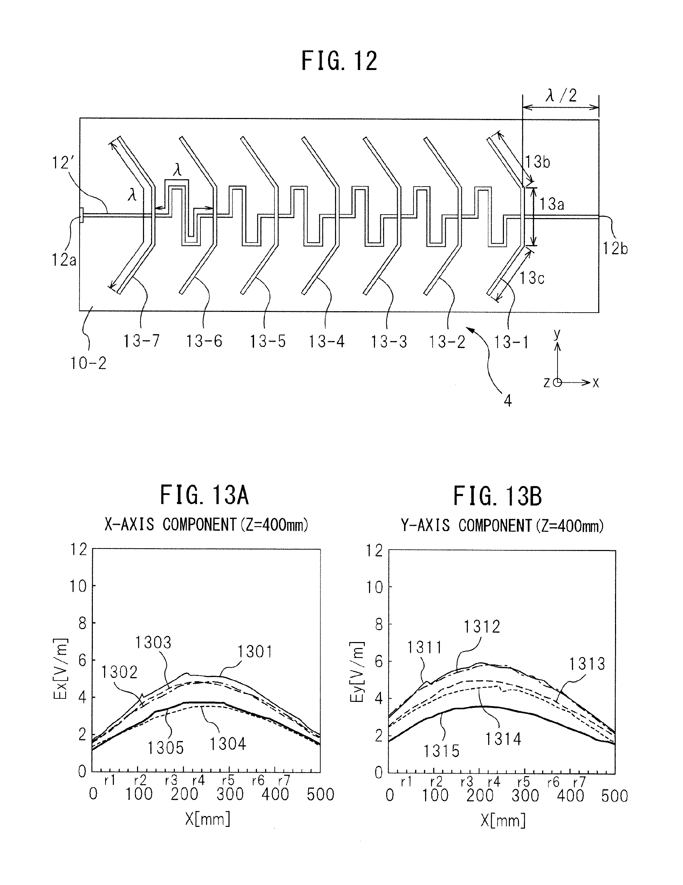

FIG. 12 is a plan view of the shelf antenna according to the fourth embodiment. In FIG. 12, the same reference numbers are provided to each component of the shelf antenna 4 according to the fourth embodiment as the reference number of the corresponding component of the shelf antenna 3 illustrated in FIG. 9.

In the shelf antenna 4 according to the fourth embodiment, as is the case in the third embodiment, a conductor 12' which forms a part of the microstrip antenna includes a meander shape, in which the conductor is bent to a right angle at a plurality of positions between the two resonators adjacent to each other. Therefore, the conductor 12' includes a part 121 along the long side direction of the shelf antenna 4, and a part 122 parallel to the short side direction of the shelf antenna 4. Therefore, the conductor 12' produces the electric field component parallel to the long side direction of the shelf antenna 4, and the electric field component parallel to the short side direction of the shelf antenna 4.

For the sake of simplicity, the long side direction along the surface of the shelf antenna 4 is referred to as an x-axis direction, and the short side direction along the surface of the shelf antenna 4 is referred to as a y-axis direction.

Each of the resonators 13-1 to 13-7 is formed with a conductor in the form of a line which has a length substantially equal to the design wavelength, and is provided on the surface of the upper layer 10-2 of the substrate 10. The resonator 13-1 is arranged at the distance of substantially half design wavelength from the open end 12b of the conductor 12' so that the resonator 13-1 is arranged in the vicinity of the nodal point of the standing wave of the current which flows through the conductor 12'. Furthermore, the resonators 13-2 to 13-7 are also arranged so that the distances between two resonators which are adjacent to each other along the conductor 12' are substantially equal to the design wavelength, and the resonators 13-2 to 13-7 are arranged in the vicinity of the nodal point of the standing wave of the current which flows through the conductor 12'.

In the present embodiment, the resonators 13-1 to 13-7 include three elements 13a to 13c which have straight line shape, respectively. The central element 13a crosses a line (hereinafter, referred to as center line for the sake of simplicity), extending from the open end 12b to the power feeding port 12a of the conductor 12', perpendicular thereto in the middle of the element 13a. On the other hand, the elements 13b and 13c which are located on both sides of the central element 13a approach the open end 12b of the conductor 12' as approaching the center line, and approach power feeding port 12a as separating from the center line, so that an acute angle may be made with the center line, respectively. As a result, each resonator is formed in a convex form toward the open end 12b of the conductor 12'.

Therefore, the electric field produced by each resonator also has, as is the case with an electric field produced by the conductor 12', a component (i.e., a component parallel to the center line) along the x-axis direction, and a component (i.e., a component perpendicular to the center line) along the y-axis direction. Therefore, in the vicinity of the surface of the shelf antenna 4, a combination of the intensity of the instant electric field component in the x-axis direction and the intensity of the instant electric field component in the y-axis direction is also changed according to a change of the phase of the current which flows through the conductor 12' and each resonator, and this results in a change of a direction of the instant electric field. Therefore, the shelf antenna 4 can uniform the intensity of the electric field regardless of the direction of the electric field. Moreover, forming each resonator in a convex shape toward the open end 12b allows a coincidence of the wavelength at which the shelf antenna 4 resonates, and the wavelength of impedance matching.

Angles made by the elements 13b and 13c on the both sides of the resonators 13-1 to 13-7 with the center line are preferably determined so that the elements 13b and 13c do not overlap with the conductor 12'. If the resonators 13-1 to 13-7 overlap with the conductor 12' in a position other than the center line, electromagnetic coupling occurs between the resonators and the conductor 12' at the overlapped position. This results in uneven distribution of the current in the resonators and uneven electric field produced by the resonators.

On the other hand, the larger the angles between the elements 13b and 13c on the both sides of the resonators 13-1 to 13-7 and the center line are, the stronger the electric field component parallel to the y-axis direction produced by each resonator is relatively, and the weaker the electric field component parallel to the x-axis direction is relatively. Therefore, the angles between the elements 13b and 13c on the both sides of the resonators 13-1 to 13-7 and the center line are preferably set so that the intensity of the electric field parallel to the y-axis direction is substantially equal to the intensity of the electric field parallel to the x-axis direction.

Moreover, the shorter the elements 13b and 13c on both sides are, the weaker the electric field component parallel to the x-axis direction produced by the resonators 13-1 to 13-7 is. Therefore, the length of the elements 13b and 13c is also preferably set so that the intensity of the electric field parallel to the y-axis direction is substantially equal to the intensity of the electric field parallel to the x-axis direction. In the present embodiment, the length of the elements 13b and 13c is set to substantially one third or more of the design wavelength.

FIG. 13A is a drawing illustrating a simulation result of an intensity of an electric field component parallel to x-axis direction formed in surface's vicinity of the shelf antenna. FIG. 13B is a drawing illustrating a simulation result of an intensity of an electric field component parallel to y-axis direction formed in surface's vicinity of the shelf antenna.

In the simulation illustrated in FIG. 13A and FIG. 13B, the condition of the simulation is defined as follows. The length of the substrate 10 along the x-axis direction is 500 mm, and the length thereof along the y-axis direction is 200 mm. Moreover, the width of the conductor 12' is 3 mm. The length of the longest part parallel to the y-axis direction is 61 mm among the bent part of the conductor 12', and the length of the parts which are located on front side and back side of the longest part and are parallel to the x-axis direction are 18 mm, respectively. The distances between two adjacent resonators on the center line are 63 mm so that the length between the two adjacent resonators along the conductor 12' is substantially equal to the design wavelength.

On the other hand, the width of each of resonators 13-1 to 13-7 is 4 mm, and length thereof is 182 mm. The length of the central element 13a of the each of resonators 13-1 to 13-7 is 60 mm, and the lengths of the elements 13b and 13c are 61 mm, respectively. Furthermore, the angle between the elements 13b, 13c, and the center line is 55 degrees (i.e., the angle between the elements 13b, 13c and the central element 13a is 35 degrees). The size and the material of each component of the shelf antenna 3 other than the above-described components are the same as the size and the material which are set in the simulation of the shelf antenna 1 according to the first embodiment.

In FIG. 13A and FIG. 13B, a horizontal axis expresses the distance from the power feeding port 12a along the x-axis direction. On the other hand, a vertical axis expresses the intensity of the electric field. Graphs 1301 to 1305 represent relations of the distance from the power feeding port 12a in the x-axis direction and the intensity of the electric field component parallel to the x-axis, at a distance of 400 mm above from the surface of the shelf antenna 4, respectively. Among them, the graph 1301 represents a relation of the distance from the power feeding port 12a and the intensity of electric field component parallel to the x-axis direction, at a position where the distance from the center line in the y-axis direction is 0 mm. Moreover, the graphs 1302 and 1303 represent the relationship of the distance from the power feeding port 12a and the intensity of electric field component parallel to the x-axis direction, at positions where the distances from the center line in the y-axis direction are 50 mm and -50 mm, respectively. Furthermore, the graphs 1304 and 1305 represent the relations of the distance from the power feeding port 12a and the intensity of electric field component parallel to the x-axis direction, at positions where the distances from the center line in the y-axis direction are 100 mm and -100 mm, respectively. Note that, in FIG. 12, the distance from the center line in the y-axis direction is represented as positive for upper side of the center line, and is represented as negative for lower side of the center line.

On the other hand, graphs 1311 to 1315 represent relations of the distance from the power feeding port 12a along the x-axis direction and the intensity of the electric field component parallel to the y-axis, at a distance of 400 mm above from the surface of the shelf antenna 4, respectively. Among them, the graph 1311 represents a relation of the distance from the power feeding port 12a and the intensity of electric field component parallel to the y-axis direction at a position where the distance from the center line in the y-axis direction is 0 mm. Moreover, the graphs 1312 and 1313 represent the relations of the distance from the power feeding port 12a and the intensity of electric field component parallel to the y-axis direction, at positions where the distances from the center line in the y-axis direction are 50 mm and -50 mm, respectively. Furthermore, the graphs 1314 and 1315 represent the relations of the distance from the power feeding port 12a and the intensity of electric field component parallel to the y-axis direction, at positions where the distances from the center line in the y-axis direction are 100 mm and -100 mm, respectively.

As illustrated in the graphs 1301 to 1305 and 1311 to 1315, it is found that, at the distance of 400 mm above from the surface of the shelf antenna 4, the difference between the intensity distribution of the electric field component parallel to the x-axis direction and the intensity distribution of the electric field component parallel to the y-axis direction is small.

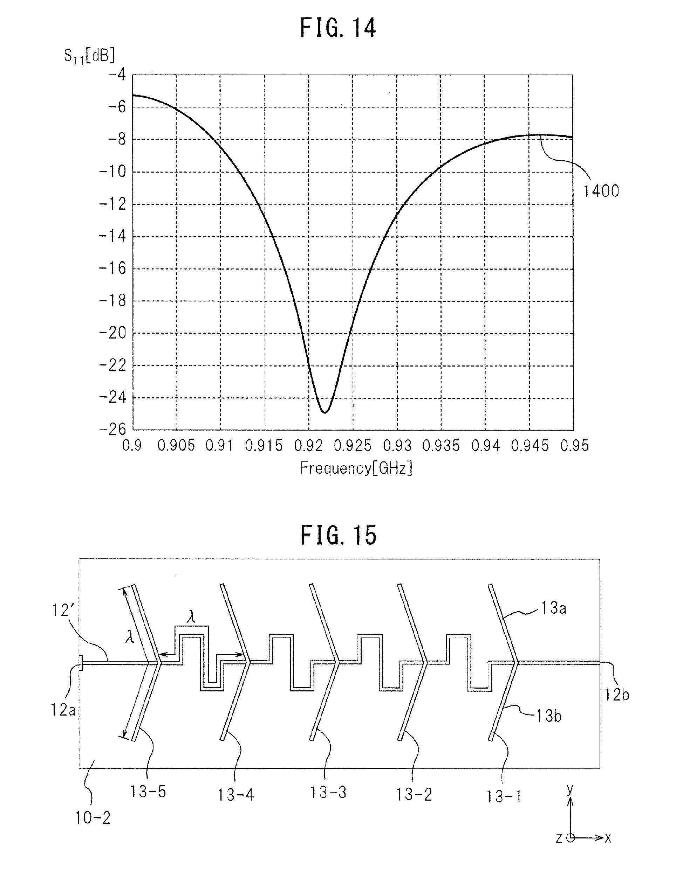

FIG. 14 is a drawing illustrating a simulation result of frequency characteristic of the S parameter with respect to the shelf antenna 4. In this simulation, it is assumed that the size and the electrical characteristic of each part of the shelf antenna 4 is the same as the size and the electrical characteristic in the simulation illustrated in FIG. 13A and FIG. 13B. In FIG. 14, a horizontal axis expresses frequency [GHz] and a vertical axis expresses value of S11 parameter [dB]. A graph 1400 represents the frequency characteristic of the S11 parameter of the shelf antenna 4 obtained by a simulation of the electromagnetic field according to the finite element method. As illustrated in the graph 1400, it was found that, in the shelf antenna 4, the S11 parameter is equal to or less than -10 dB, the range providing an indication of excellent antenna characteristics, in 912 MHz to 934 MHz utilized for the RFID system.

When the shelf antenna 4 communicates with other communication apparatus, such as an RFID tag attached to an article placed on the shelf antenna 4, the other communication apparatus may face various directions against the shelf antenna 4. However, according to the present embodiment, the shelf antenna 4 can make the intensity of the electric field uniform regardless of the direction of the electric field. Accordingly, the shelf antenna 4 can perform good communication with the other communication apparatus regardless the direction of the antenna of the other communication apparatus.

FIG. 15 is a plan view of a shelf antenna according to a modification of the fourth embodiment.

Also in the present modification, each of the resonators 13-1 to 13-5 is formed with a conductor in the form of a line which has a length substantially equal to the design wavelength, and each of resonators is provided on the surface of the upper layer 10-2 of the substrate. Each of the resonators 13-1 to 13-5 is arranged so that the distance between two resonators adjacent to each other along the conductor 12' is substantially equal to the design wavelength.

In the present modification, each of the resonators 13-1 to 13-5 includes two elements 13a and 13b which have straight line shape, and are connected at a position in which the elements overlap with the center line extending from the open end 12b to the power feeding port 12a of the conductor 12'. The elements 13a and 13b are symmetrical to the center line, and are formed to make an acute angle with the center line so that the elements are most close to the open end 12b at the position in which the elements overlap with the center line and approach the power feeding port 12a as separating from the center line. Therefore, also in the present modification, the resonators 13-1 to 13-5 are formed in the convex shape toward the open end 12b of the conductor 12', respectively.

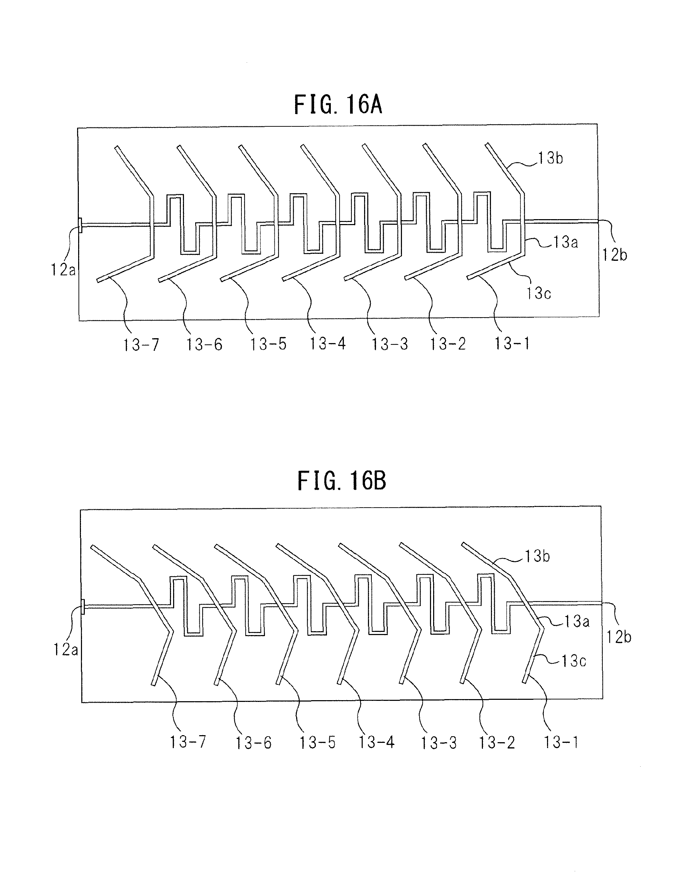

FIG. 16A and FIG. 16B are plan views of the shelf antenna according to further modification of the fourth embodiment, respectively. In the modification illustrated in FIG. 16A and FIG. 16B, the shape and direction of each resonator are different from the shelf antenna 4 illustrated in FIG. 12. In the modification illustrated in FIG. 16A, respective angles made by the two elements 13b and 13c on the both sides of the resonators 13-1 to 13-7 and the central element 13a are different each other. Specifically, the angle between the element 13b and the central element 13a is larger than the angle between the element 13c and the central element 13a. Accordingly, each resonator is asymmetrical to the center line extending from the power feeding port 12a to the open end 12b.

Moreover, in the modification illustrated in FIG. 16B, each resonator is arranged with a tilt to the center line so that the angle between the center line extending from the power feeding port 12a to the open end 12b, and the central element 13a of each resonator 13-1 to 13-7 is the acute angle. Accordingly, in the present modification, an angle between the element 13b on one side of the resonator and the center line is smaller than an angle between the element 13c on another side and the center line. Accordingly, each resonator is asymmetrical to the center line. In both modifications, each resonator is formed in the convex shape toward the open end 12b of the conductor 12', and the angle between at least a part of the resonator and the center line is made an acute angle. Therefore, as illustrated in FIG. 16A and FIG. 16B, even when each resonator is formed so as to be asymmetrical to the center line, each resonator can produce the electric field component of the x-axis direction, and the electric field component of the y-axis direction.

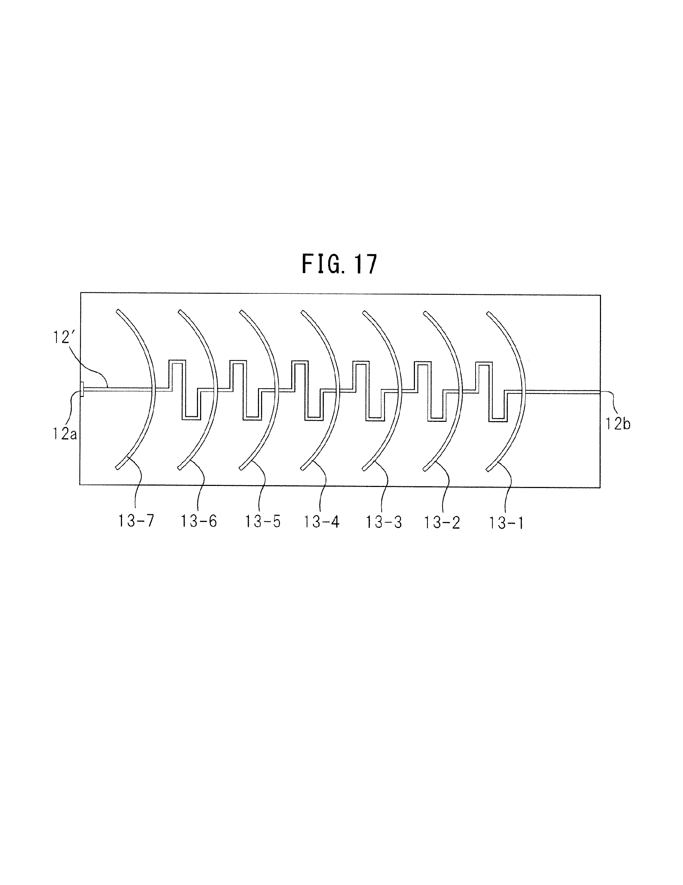

FIG. 17 is a plan view of a shelf antenna according to a further modification of the fourth embodiment. In this modification, the shape of each resonator is different from the resonator in the shelf antenna 4 illustrated in FIG. 12. In this modification, the resonators 13-1 to 13-7 are formed in arc-like shape. Also in this modification, each resonator is formed in the convex shape toward the open end 12b of the conductor 12', and is arranged so that the middle point of each resonator crosses the conductor 12'. Therefore, since the angle between the resonator and the line extending from the power feeding port 12a to the open end 12b is an acute angle except for the middle point of the resonator, each resonator can produce the electric field component parallel to the x-axis direction, and the electric field component parallel to the y-axis direction. Therefore, the shelf antenna 4 according to this modification can uniform the intensity of the electric field regardless of the direction of the electric field. Consequently, this shelf antenna enables communication with the other communication apparatus, regardless the direction of the antenna of the other communication apparatus, such as the RFID tag.

Note that, also in these modifications of the fourth embodiment, it is preferable that each resonator does not overlap with the meandering shape part of the conductor, in order to avoid uneven distribution of the current in the resonator.

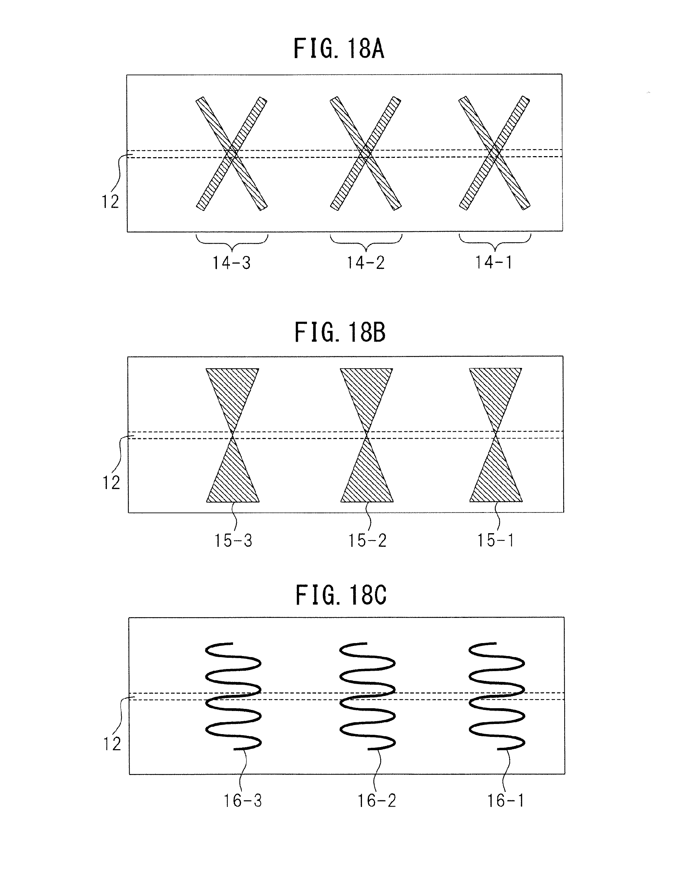

Furthermore, according to modifications of each of the above-described embodiments, each resonator may have a shape other than the form of a line. FIG. 18A to FIG. 18C are drawings illustrating shapes of the resonators according to other embodiments, respectively. In each modification, each resonator is arranged in the vicinity of the nodal point of the standing wave of the current which flows through the microstrip antenna, i.e., in the vicinity of any of the positions at the distance of half design wavelength and distances of integral multiples thereof from the open end.

In an example illustrated in FIG. 18A, the resonators 14-1 to 14-3 include the two conductors in the form of lines arranged in the shape of an X character. In this example, the two conductors which form the resonator also have a length substantially equal to the design wavelength. Each resonator is arranged so that an intersection of the two conductors which form the resonator is located right above the conductor 12.

In an example illustrated in FIG. 18B, the resonators 15-1 to 15-3 have a bow-tie-like shape. Each of the resonators 15-1 to 15-3 is arranged so that the part at which the width along the longitudinal direction of the conductor 12 is minimum is located above the conductor 12.

In an example illustrated in FIG. 18C, the resonators 16-1 to 16-3 include a meandering shape, respectively. In this case, each of the resonators 16-1 to 16-3 is designed so that the length along the meandering conductor is substantially equal to the design wavelength. Each resonator is arranged so that a middle point of the resonator is located above the conductor 12. Moreover, the shapes of respective resonators may differ with each other. For example, if a shelf antenna includes three resonators, one of the resonators may be a conductor in the form of a line as the resonator 13-1 illustrated in FIG. 3, another may be a conductor in the form of X character illustrated in FIG. 18A, and still another may be a conductor in the form of a bow tie illustrated in FIG. 18B.

According to yet another modifications, each resonator may be arranged so that the longitudinal direction of the resonator and the longitudinal direction of the conductor which is a part of the microstrip antenna take an acute angle.

In any of the embodiments and their modifications, one of resonators is preferably arranged in the vicinity of the position at the distance of the half design wavelength from the open end of the microstrip antenna, i.e., in the vicinity of the nodal point nearest to the open end among the nodal points of the standing wave of current which flows through the microstrip antenna. This is because the electric field in the vicinity of the nodal point which is nearest to the open end is stronger than the electric field in the vicinity of other nodal points, and therefore the resonator arranged in the vicinity of the nodal point can be strongly electromagnetically coupled with the microstrip antenna.

## Claims

1. A near field antenna comprising:
a substrate including a first dielectric layer and a second dielectric layer provided above the first dielectric layer;
a ground electrode arranged on a lower surface of the first dielectric layer;
a conductor which is arranged between the first dielectric layer and the second dielectric layer, and forms a microstrip antenna with the ground electrode, one end of the conductor being connected to a power feeding port and the another end of the conductor being an open end; and
at least one resonator arranged on an upper surface of the second dielectric layer, within a range in which the resonator is able to electromagnetically couple with the microstrip antenna for any of nodal points of a standing wave of current which flows through the microstrip antenna depending on an electric wave with a certain design wavelength, radiated from the microstrip antenna or received by the microstrip antenna.

2. The near field antenna according to claim 1, wherein a first resonator among the at least one resonator is arranged at a distance of half design wavelength along the conductor from the open end.

3. The near field antenna according to claim 2, wherein
the at least one resonator comprises a plurality of resonators, and
each of the plurality of resonators is arranged so that the distance between two adjacent resonators is a half of the design wavelength along the conductor.

4. The near field antenna according to claim 2, wherein
the at least one resonator comprises a plurality of resonators, and
each of the plurality of resonators is arranged so that the distance between two adjacent resonators is the design wavelength along the conductor.

5. The near field antenna according to claim 4, wherein
the conductor includes a meandering shape between the two adjacent resonators, and
an interval between the two adjacent resonators is shorter than the design wavelength.

6. The near field antenna according to claim 3, wherein
the conductor includes a meandering shape between the two adjacent resonators, and
an interval between the two adjacent resonators is shorter than half of the design wavelength.

7. The near field antenna according to claim 5, wherein
the plurality of resonators are formed convex toward the open end of the conductor, and at least a part of each of the plurality of resonators and a line extending from the power feeding port to the open end of the conductor makes an acute angle.

8. The near field antenna according to claim 7, wherein
the at least a part of the plurality of resonators is both ends of the resonators.

9. The near field antenna according to claim 5, wherein
the plurality of resonators are formed so as to not be overlapped with a part including the meandering shape of the conductor.

10. The near field antenna according to any one of claims 1 to 6, wherein
the at least one resonator includes a shape in which width along a longitudinal direction of the conductor is wider as a distance from the conductor is larger.

11. The near field antenna according to any one of claims 1 to 6, wherein
the at least one resonator includes two second conductors arranged to intersect each other in a shape of an X character, and
an intersection of the two second conductors is located right above the conductor.

12. The near field antenna according to any one of claims 1 to 6, wherein the at least one resonator includes a meandering shape.
